# EUROPÄISCHE PATENTANMELDUNG

(11) **EP 2 249 057 A1**
(43) Veröffentlichungstag der Anmeldung: **10.11.2010**
(21) Anmeldenummer: 09159553.8
(22) Anmeldetag: 06.05.2009
(51) Int. Cl.: F16F 9/06

(54) **Dämpfungseinrichtung für Radfahrzeuge**

(71) Anmelder: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(57) **Zusammenfassung**

Die vorliegende Erfindung betrifft eine Dämpfungseinrichtung (1) zur Stoß- und/oder Schwingungsdämpfung in Radfahrzeugen, bestehend aus mindestens einem teleskopartigen, hydraulischen Dämpferzylinder (2) mit einem in einem Zylinder (4) relativbeweglich geführten Kolben (6).Der Kolben (6) weist einseitig eine umfangsgemäß abgedichtet aus dem Zylinder (4) nach außen geführte Kolbenstange (8) auf und teilt innerhalb des Zylinders (4) einen die Kolbenstange (8) umschließenden Ringraum (10) von einem gegenüberliegenden Zylinderraum (12) ab. Der Ringraum (10) und der Zylinderraum (12) sind mit einem hydraulischen Dämpfungsmedium gefüllt und über eine innerhalb des Dämpferzylinders (2) angeordnete Dämpfungsventilanordnung (14) miteinander und mit einem Ausgleichsraum (16) hydraulisch verbunden. Der Ausgleichsraum (16) ist zumindest anteilig in einem separaten, von dem Dämpferzylinder (2) räumlich getrennt anzuordnenden Vorratsbehälter (18) angeordnet.

## Beschreibung

Die vorliegende Erfindung betrifft gemäß dem Oberbegriff des Anspruchs 1 eine Dämpfungseinrichtung zur Stoß- und/oder Schwingungsdämpfung in Radfahrzeugen, bestehend aus mindestens einem teleskopartigen, hydraulischen Dämpferzylinder mit einem in einem Zylinder relativbeweglich geführten Kolben, wobei der Kolben einseitig eine umfangsgemäß abgedichtet aus dem Zylinder nach außen geführte Kolbenstange aufweist und innerhalb des Zylinders einen die Kolbenstange umschließenden Ringraum von einem gegenüberliegenden Zylinderraum abteilt, und wobei der Ringraum und der Zylinderraum mit einem hydraulischen Dämpfungsmedium gefüllt sind und über eine innerhalb des Dämpferzylinders angeordnete Dämpfungsventilanordnung miteinander und mit einem Ausgleichsraum hydraulisch verbunden sind.

Bekannte Stoß- und Schwingungsdämpfer der allgemein üblichen Bauart (siehe dazu beispielsweise JP 2005 188601 A und JP 2005 155793 A) sind in aller Regel als so genannte Zweirohrdämpfer ausgebildet, wobei der Ausgleichsraum als eine den Zylinder koaxial umschließende Ringkammer ausgebildet ist. Diese Ringkammer ist im Fußbereich des Zylinders auf der dem Kolben gegenüberliegenden, unteren Seite mit dem Zylinderraum verbunden, so dass bei einer Einfederungsdämpfung ein bestimmtes, dem jeweils in den Zylinder eingeschobenen Kolbenstangen-Volumen entsprechendes Volumen des Dämpfungsmediums in den Ausgleichsraum verdrängt wird. Die Ausgleichs-Ringkammer enthält oberhalb des jeweils enthaltenen hydraulischen Dämpfungsmediums ein Gaspolster (z. B. Luft). Dadurch ist allerdings die räumliche Anordnung bzw. Ausrichtung des Dämpfers nicht beliebig, sondern es ist nur eine im Wesentlichen vertikale Anordnung möglich, um eine Vermischung des Dämpfungsmediums mit Gas/Luft zu vermeiden. Weiterhin führt die direkt den Zylinder umschließende Anordnung der Ausgleichskammer zu einer großen Bauform (großer Durchmesser). Ein weiterer Nachteil ist, dass das Gesamtvolumen des im Dämpfer unterzubringenden hydraulischen Dämpfungsmediums sehr begrenzt ist, so dass es sich durch die in der integrierten Dämpfungsventilanordnung erfolgende Drosselung relativ schnell und stark erwärmt, zumal der den Zylinder umschließende Ausgleichsraum auch einen isolierenden Mantel bildet, der zu einem Wärmestau innerhalb des Zylinders führen kann.

Der vorliegenden Erfindung liegt die Aufgabe zu Grunde, eine Dämpfungseinrichtung der genannten Art so zu verbessern, dass der/jeder Dämpferzylinder mit kompakter Bauform in weitgehend beliebiger Raumorientierung eingesetzt werden kann, wobei zudem im Betrieb eine geringere Erwärmung auftreten soll.

Erfindungsgemäß wird dies durch die Merkmale des Anspruchs 1 erreicht. Vorteilhafte Ausgestaltungsmerkmale sind in den abhängigen Ansprüchen sowie auch in der anschließenden Beschreibung enthalten.

Demnach ist erfindungsgemäß vorgesehen, dass der Ausgleichsraum zumindest anteilig in einem separaten, von dem Dämpferzylinder räumlich getrennt anzuordnenden Vorratsbehälter angeordnet ist. Dabei ist der Vorratsbehälter mit dem Dämpferzylinder über eine Hydraulikleitung zu verbinden.

Durch die erfindungsgemäße Ausgestaltung kann zunächst das Gesamtvolumen des hydraulischen Dämpfungsmediums nahezu beliebig vergrößert werden. Hierdurch und auch durch die räumliche Trennung des Ausgleichsraums vom Dämpferzylinder und dessen integrierter Dämpfungsventilanordnung kann eine deutliche Reduzierung der Arbeitstemperatur erreicht werden, zumal auch durch Vermeidung eines thermisch isolierenden Zylindermantels und durch die Oberfläche des zusätzlichen Vorratsbehälters eine effektive Kühlung durch Wärmeabgabe an die Umgebung erreicht wird. Die verringerte Arbeitstemperatur führt zu einer verlängerten Lebensdauer des Dämpferzylinders insbesondere im Bereich von Dichtungen.

Weiterhin kann der eigentliche Dämpferzylinder durch den externen Vorratsbehälter kompakter mit geringerem Durchmesser ausgebildet sein, und er kann lageunabhängig, in praktisch beliebiger Raumorientierung eingesetzt werden, weil ja der externe Vorratsbehälter an einer anderen Stelle räumlich getrennt von dem Dämpferzylinder montiert werden kann. Dabei ist es vorteilhaft, wenn der Vorratsbehälter als Druckspeicher mit einem den Ausgleichsraum von einer Druckkammer trennenden Trennelement ausgebildet ist. Hierdurch ist er ebenfalls lageunabhängig in beliebiger Orientierung montierbar. Bevorzugt ist das Trennelement als ein in dem zylindrischen Vorratsbehälter schwimmend, frei verschiebbar geführter Trennkolben ausgebildet. Diese Lösung ist relativ unempfindlich gegen höhere Temperaturen. Alternativ kann aber auch eine flexible Wandung (Membran oder Blase) als Trennelement vorgesehen sein, wenn weniger hohe Dämpfungsanforderungen gestellt sind. In jedem Fall enthält die Druckkammer ein insbesondere pneumatisches Druckmedium (Gas, insbesondere Stickstoff) mit einem geringfügigen Überdruck insbesondere im Bereich von 5 bis 20 bar. Dieser Vorspanndruck gewährleistet eine gute Rückströmung des hydraulischen Dämpfungsmediums aus dem Ausgleichsraum zurück in den Dämpferzylinder bei einer Ausfederungsdämpfung.

In weiterer vorteilhafter Ausgestaltung der erfindungsgemäßen Dämpfungseinrichtung können in einem Fahrzeug mindestens zwei, beispielsweise auch vier Dämpferzylinder bezüglich ihrer Zylinder- und Ringräume mit dem Ausgleichsraum desselben externen Vorratsbehälters verbunden sein. Dies führt zu einer besonderen Reduzierung des erforderlichen Bauraums, indem der einzige, gemeinsame Vorratsbehälter an einer geeigneten Stelle im Fahrzeug untergebracht werden kann. Zudem hat diese hydraulische Zusammenschaltung den zusätzlichen Vorteil eines Wärmeaustausches zwischen den einzelnen Dämpferzylindern, indem deren Dämpfungsmedien ja über den gemeinsamen Vorratsbehälter in kommunizierender Verbindung stehen.

Im Folgenden soll nun die Erfindung anhand der Zeichnung beispielhaft genauer erläutert werden. Es zeigen:
- Fig. 1: eine erfindungsgemäße Dämpfungseinrichtung mit einem Dämpferzylinder und einem zugehörigen externen Vorratsbehälter in Längsschnittdarstellung der Komponenten,
- Fig. 2: eine Ansicht wie in Fig. 1 zur Erläuterung der Vorgänge im Falle einer Einfederungsdämpfung,
- Fig. 3: eine Ansicht analog zu Fig. 2, jedoch für den Fall einer Ausfederungsdämpfung, und
- Fig. 4: eine erfindungsgemäße Dämpfungseinrichtung in einer Ausführung mit mehreren (hier beispielhaft vier) Dämpferzylindern und einem gemeinsamen Vorratsbehälter.

In den verschiedenen Figuren der Zeichnung sind gleiche Teile stets mit den gleichen Bezugszeichen versehen.

Eine erfindungsgemäße Dämpfungseinrichtung 1 dient zur Stoß- und/oder Schwingungsdämpfung von Rad-Federungsbewegungen in Radfahrzeugen. Dazu besteht die Dämpfungseinrichtung 1 aus mindestens einem teleskopartigen, hydraulischen Dämpferzylinder 2 mit einem in einem Zylinder 4 linear relativbeweglich geführten Kolben 6. Der Kolben 6 weist auf einer Seite eine umfangsgemäß abgedichtet aus dem Zylinder 4 nach außen geführte Kolbenstange 8 auf, wobei der Kolben 6 innerhalb des Zylinders 4 einen die Kolbenstange 8 umschließenden Ringraum 10 von einem gegenüberliegenden Zylinderraum 12 abteilt. Der Ringraum 10 und der Zylinderraum 12 sind mit einem hydraulischen Dämpfungsmedium (Hydrauliköl) gefüllt und einerseits über eine innerhalb des Dämpferzylinders 2 angeordnete Dämpfungsventilanordnung 14 miteinander und andererseits mit einem Ausgleichsraum 16 hydraulisch verbunden.

Der Ausgleichsraum 16 dient bei den Dämpfungsbewegungen des Dämpferzylinders 2 jeweils zur Aufnahme oder zur Abgabe eines bestimmten Volumenanteils des Dämpfungsmediums, wobei dieser Volumenanteil dem jeweiligen Volumen einer TeilLänge der Kolbenstange 8 entspricht, die jeweils in den Zylinder 4 eingeschoben oder aus dem Zylinder 4 herausgezogen wird. Beim Einschieben des Kolbens 6 in den Zylinder 4 (Einfederungsdämpfung) wird aus dem Zylinderraum 12 ein bestimmter Volumenanteil des Dämpfungsmediums verdrängt, und wegen des um den Querschnitt der Kolbenstange 8 reduzierten Ring-Querschnittes des Ringraums 10 kann dieser nicht das vollständige aus dem Zylinderraum 12 verdrängte Volumen aufnehmen. Die Volumendifferenz strömt daher in den Ausgleichsraum 16. Bei einer umgekehrten Auszugsbewegung (Ausfederungsdämpfung) strömt das Dämpfungsmedium anteilig aus dem Ringraum 10 und aus dem Ausgleichsraum 16 in den Zylinderraum 12. Die beschriebenen Strömungen werden über die Dämpfungsventilanordnung 14 gedämpft (gedrosselt), wobei in aller Regel die Dämpfungsventilanordnung 14 so ausgelegt ist, dass bei der Einschubbewegung (Einfederungsdämpfung) eine geringere Dämpfungskraft und bei der Auszugsbewegung (Ausfederungsdämpfung) eine höhere Dämpfungskraft zu überwinden ist.

Erfindungsgemäß ist nun vorgesehen, dass der Ausgleichsraum 16 zumindest anteilig in einem separaten, von dem Dämpferzylinder 2 räumlich getrennt anzuordnenden Vorratsbehälter 18 angeordnet ist, der mit dem Dämpfungszylinder 2 über eine Hydraulikleitung 20 verbunden ist. Dadurch kann der Dämpferzylinder 2 konstruktiv einfach, kostengünstig und sehr kompakt, d. h. mit geringem Durchmesser, als so genannter "Einrohrdämpfer" ausgebildet sein.

In vorteilhafter Ausgestaltung ist der Vorratsbehälter 18 als Druckspeicher mit einem den Ausgleichsraum 16 mediendicht von einer Druckkammer 22 trennenden Trennelement 24 ausgebildet. Bevorzugt enthält die Druckkammer 22 ein insbesondere pneumatisches Druckmedium, insbesondere eine geeignetes Gas, wie Stickstoff, mit einem Vorspanndruck im Bereich von 5 bis 20 bar. In weiterer bevorzugter Ausgestaltung ist das Trennelement 24 als ein in dem zylindrischen Vorratsbehälter 18 frei verschiebbar (schwimmend) geführter Trennkolben 26 ausgebildet. Der Trennkolben 26 ist über eine umfangsgemäße Kolbendichtung 28 gegen die Innenwandung des Vorratsbehälters 18 abgedichtet.

Was die bereits erwähnte Dämpfungsventilanordnung 14 betrifft, so besteht diese zumindest aus zwei gegensinnig wirkenden Dämpfungsventilen 30 und 32, die in Strömungspassagen 34 und 36 im Bereich des Kolbens 6 zwischen dem Ringraum 10 und den Zylinderraum 12 angeordnet sind. Bevorzugt ist zusätzlich vorgesehen, dass der Zylinderraum 12 auf seiner dem Kolben 6 gegenüberliegenden Seite über eine in dem Zylinder 4 angeordnete Trennwand 38 von einer Übergangskammer 40 abgeteilt ist, wobei die Übergangskammer 40 über die Hydraulikleitung 20 mit dem Ausgleichsraum 16 in dem externen Vorratsbehälter 18 verbunden ist. Dabei weist die Dämpfungsventilanordnung 14 vorzugsweise auch im Bereich der Trennwand 38 in Strömungspassagen 42, 44 zwischen dem Zylinderraum 12 und der Übergangskammer 40 (mindestens) zwei gegensinnig wirkende Dämpfungsventile 46, 48 auf.

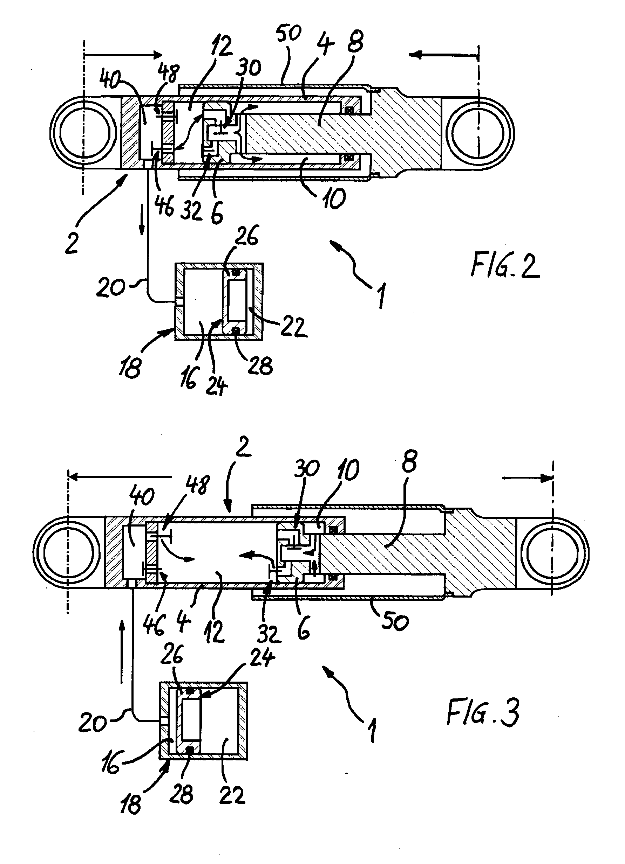

Zur Wirkungsweise der Dämpfungsventilanordnung 14 wird auf die Figuren 2 und 3 verwiesen. In Fig. 2 ist der Vorgang bei einer Einschubbewegung (Einfederungsdämpfung) veranschaulicht. Dabei strömen aus dem sich verkleinernden Zylinderraum 12 Volumenanteile des Dämpfungsmediums einerseits über das Dämpfungsventil 30 in den Ringraum 10 und andererseits über das Dämpfungsventil 46 in den Ausgleichsraum 16. Diese Dämpfungsventile 30 und 46 sind für eine relativ geringere Dämpfungskraft ausgelegt.

In Fig. 3 ist die umgekehrte Auszugsbewegung des Dämpferzylinders 2 veranschaulicht. Hierbei vergrößert sich das Volumen des Zylinderraums 12. Dadurch werden Volumenanteile des Dämpfungsmediums einerseits aus dem Ringraum 10 über das Dämpfungsventil 32 und andererseits aus dem Ausgleichsraum 16 über das Dämpfungsventil 48 zurück in den Zylinderraum 12 verdrängt bzw. angesaugt. Diese Dämpfungsventile 32 und 48 sind für eine relativ höhere Dämpfungskraft ausgelegt.

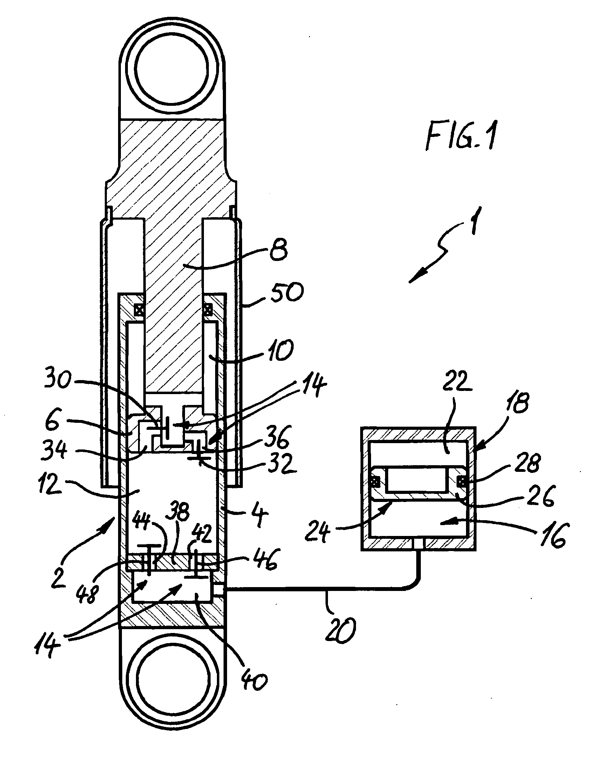

Wie sich noch aus Fig. 1 bis 3 ergibt, kann der Zylinder 4 koaxial von einem Schutzrohr 50 umschlossen sein, welches einendig mit dem nach außen geführten Ende der Kolbenstange 8 verbunden ist und sich anderendig frei axial über den Zylinder 4 hinweg erstreckt.

In aller Regel wird innerhalb eines Fahrzeuges jedem Rad ein eigener Dämpferzylinder 2 zugeordnet, wobei der Dämpferzylinder 2 zur Erzeugung einer lastabstützenden Tragfederkraft mit mindestens einem mechanischen und/oder pneumatischen Federelement zusammenwirkt. Beispielsweise kann ein von dem Dämpferzylinder 2 unabhängiges Federelement, wie beispielsweise ein Blattfederpaket oder eine Luftfeder, zwischen einer Radaufhängung und einem Fahrzeugrahmen angeordnet sein.

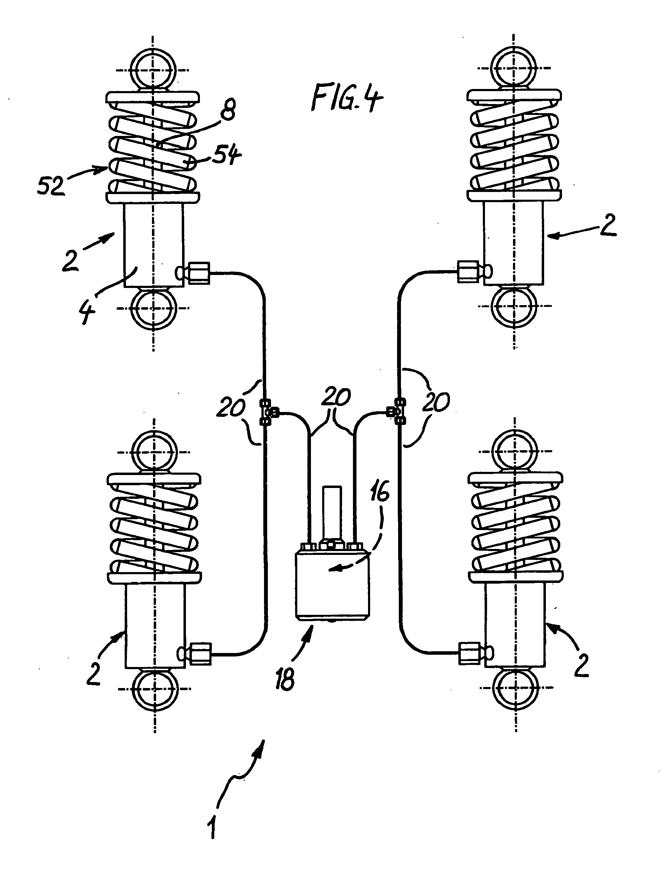

Wie beispielhaft in Fig. 4 dargestellt ist, kann auch dem Dämpferzylinder 2 ein Federelement 52 unmittelbar zugeordnet sein, und zwar insbesondere in einer Ausführung als eine den Dämpferzylinder 2 koaxial umschließende Schraubendruckfeder 54. Diese Ausführung kann als "Federbeindämpfer" bezeichnet werden.

Wie weiterhin in Fig. 4 dargestellt ist, können vorteilhafterweise mindestens zwei - wie dargestellt beispielsweise vier- Dämpferzylinder 2 bezüglich ihrer Zylinder- und Ringräume 10, 12 mit dem Ausgleichsraum 16 desselben externen Vorratsbehälters 18 verbunden sein.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Dämpfungseinrichtung (1) zur Stoß- und/oder Schwingungsdämpfung in Radfahrzeugen, bestehend aus mindestens einem teleskopartigen, hydraulischen Dämpferzylinder (2) mit einem in einem Zylinder (4) relativbeweglich geführten Kolben (6), wobei der Kolben (6) einseitig eine umfangsgemäß abgedichtet aus dem Zylinder (4) nach außen geführte Kolbenstange (8) aufweist und innerhalb des Zylinders (4) einen die Kolbenstange (8) umschließenden Ringraum (10) von einem gegenüberliegenden Zylinderraum (12) abteilt, und wobei der Ringraum (10) und der Zylinderraum (12) mit einem hydraulischen Dämpfungsmedium gefüllt sind und über eine innerhalb des Dämpferzylinders (2) angeordnete Dämpfungsventilanordnung (14) miteinander und mit einem Ausgleichsraum (16) hydraulisch verbunden sind,
**dadurch gekennzeichnet, dass** derAusgleichsraum(16) zumindest anteilig in einem separaten, von dem Dämpferzylinder (2) räumlich getrennt anzuordnenden Vorratsbehälter (18) angeordnet ist.

2. Dämpfungseinrichtung nach Anspruch 1,
**dadurch gekennzeichnet, dass** derVorratsbehälter(18)mit dem Dämpferzylinder (2) über eine Hydraulikleitung (20) verbunden ist.

3. Dämpfungseinrichtung nach Anspruch 1 oder 2,
**dadurch gekennzeichnet, dass** derVorratsbehälter(18)als Druckspeicher mit einem den Ausgleichsraum (16) von einer Druckkammer (22) trennenden Trennelement (24) ausgebildet ist.

4. Dämpfungseinrichtung nach Anspruch 3,
**dadurch gekennzeichnet, dass** die Druckkammer (22) ein insbesondere pneumatisches Druckmedium mit einem Vorspanndruck im Bereich von 5 bis 20 bar enthält.

5. Dämpfungseinrichtung nach Anspruch 3 oder 4,
**dadurch gekennzeichnet, dass** dasTrennelement(24)alsein in dem zylindrischen Vorratsbehälter (18) frei verschiebbar geführter Trennkolben (26) ausgebildet ist.

6. Dämpfungseinrichtung nach einem der Ansprüche 1 bis 5,
**dadurch gekennzeichnet, dass** der Zylinderraum (12) auf seiner dem Kolben (6) gegenüberliegenden Seite über eine in dem Zylinder (4) angeordnete Trennwand (38) von einer Übergangskammer (40) abgeteilt ist, wobei die Übergangskammer (40) mit dem externen Vorratsbehälter (18) verbunden ist.

7. Dämpfungseinrichtung nach einem der Ansprüche 1 bis 6,
**dadurch gekennzeichnet, dass** die Dämpfungsventilanordnung (14) im Bereich des Kolbens (6) in Strömungspassagen (34, 36) zwischen dem Zylinderraum (12) und dem Ringraum (10) mindestens zwei gegensinnig wirkende Dämpfungsventile (30, 32) aufweist.

8. Dämpfungseinrichtung nach Anspruch 6 oder 7,
**dadurch gekennzeichnet, dass** die Dämpfungsventilanordnung (14) im Bereich der Trennwand (38) in Strömungspassagen (42, 44) zwischen dem Zylinderraum (12) und der Übergangskammer (40) mindestens zwei gegensinnig wirkende Dämpfungsventile (46, 48) aufweist.

9. Dämpfungseinrichtung nach einem der Ansprüche 1 bis 8,
**dadurch gekennzeichnet, dass** der Dämpferzylinder (2) zur Erzeugung einer lastabstützenden Tragfederkraft mit mindestens einem Federelement (52) zusammenwirkt.

10. Dämpfungseinrichtung nach Anspruch 9,
**dadurch gekennzeichnet, dass** dasFederelement(52)alseine den Dämpferzylinder (2) koaxial umschließende Schraubendruckfeder (54) ausgebildet ist.

11. Dämpfungseinrichtung nach einem der Ansprüche 1 bis 10,
**dadurch gekennzeichnet, dass** mindestens zwei Dämpferzylinder (2) mit dem Ausgleichsraum (16) desselben externen Vorratsbehälters (18) verbunden sind.
